# DEMANDE DE BREVET EUROPEEN

(11) **EP 3 208 146 A1**
(43) Date de publication de la demande: **23.08.2017**
(21) Numéro de dépôt: 17154873.8
(22) Date de dépôt: 06.02.2017
(51) Int. Cl.: B60Q 1/04

(54) **BLOC OPTIQUE DE VÉHICULE TERRESTRE À BOÎTIER À PAROI MUNIE DE ZONE(S) D AFFAIBLISSEMENT**

(30) Priorité: 17.02.2016 FR 1651286
(71) Demandeur: Peugeot Citroën Automobiles SA, 78140 Vélizy-Villacoublay (FR)
(72) Inventeur: MAGAS, Mihaela Maria, 70110 Autrey les Cerre (FR)

(57) **Abrégé**

Un bloc optique (BO) est destiné à équiper un véhicule terrestre et comprend un boîtier (BB) comportant une paroi (PB) qui délimite une cavité, logeant des moyens définissant au moins une fonction photométrique, et qui comprend un bord périphérique (BP) auquel est couplée une glace de protection (GP). Cette paroi (PB) comprend également, au moins dans une partie supérieure (PS), au moins une zone d'affaiblissement (ZA) définie au moins en partie au voisinage du bord périphérique (BP) et propre, en cas de force exercée sur la glace de protection (GP) par l'impact d'une partie d'un corps, à permettre à la paroi (PB) de se casser et ainsi permettre un enfoncement de la partie du corps dans la cavité.

## Description

L'invention concerne les blocs optiques de véhicule terrestre qui comprennent un boîtier auquel est solidarisée une glace de protection.

Certains blocs optiques de véhicule terrestre, généralement de type automobile, comprennent un boîtier comportant une paroi délimitant une cavité qui loge des moyens définissant au moins une fonction photométrique (d'éclairage, de signalisation ou de décoration). Cette paroi comprend un bord périphérique auquel est couplée une glace de protection (en verre ou en matière plastique ou synthétique).

De tels blocs optiques sont généralement complètement intégrés dans un pare-chocs, ou entourés par un pare-chocs, une aile avant et un capot en particulier lorsqu'ils constituent un projecteur (ou phare) avant. Par ailleurs, ces blocs optiques sont généralement solidarisés au véhicule au moyen de trois pattes de fixation (deux latérales supérieures et une inférieure).

Lorsqu'une partie d'un corps, comme par exemple une tête, percute ce type de bloc optique, elle commence par s'enfoncer sur une courte distance du fait de la déformation de la glace de protection et de son environnement immédiat (par exemple un pare-chocs et/ou une aile et/ou un capot et sa doublure). Puis, cet enfoncement s'interrompt brutalement lorsque les pattes de fixation et/ou les éléments auxquels ces dernières sont solidarisées fléchissent ou se cassent, du fait du blocage du boîtier par les éléments qui l'entourent à des distances très petites. En d'autres termes, les « côtes d'enfoncement » du corps s'avèrent très limitées, ce qui peut lui occasionner des dommages importants.

Il a certes été proposé de rendre le boîtier déformable suivant une direction privilégiée (généralement la direction longitudinale du véhicule), mais dans le but de limiter autant que possible les dégâts occasionnés aux éléments auxquels il est solidarisé pour faciliter les réparations après un choc. Cependant, cette solution ne permet pas d'augmenter significativement les côtes d'enfoncement du corps du fait de la direction d'impact et de la zone d'impact, et du fait que l'enfoncement recherché est plutôt transversal.

Il a également été proposé d'adjoindre au boîtier des inserts destinés, en cas de choc d'une partie d'un corps sur la glace de protection associée, à casser cette dernière. Mais une fois la glace de protection cassée, l'enfoncement de la partie du corps est immédiatement interrompu par le bord périphérique du boîtier.

L'invention a donc notamment pour but d'améliorer la situation.

Elle propose notamment à cet effet un bloc optique destiné à équiper un véhicule terrestre et comprenant un boîtier comportant une paroi qui délimite une cavité, logeant des moyens définissant au moins une fonction photométrique, et qui comprend un bord périphérique auquel est couplée une glace de protection.

Ce bloc optique se caractérise par le fait que la paroi de son boîtier comprend également, au moins dans une partie supérieure, au moins une zone d'affaiblissement définie au moins en partie au voisinage de son bord périphérique et propre, en cas de force exercée sur la glace de protection par l'impact d'une partie d'un corps, à permettre à la paroi de se casser et ainsi permettre un enfoncement de la partie du corps dans la cavité.

Grâce au bris du boîtier dans sa partie avant l'enfoncement de la partie du corps n'est plus brusquement interrompu en cas de choc, ce qui est de nature à limiter les dommages que cette partie du corps peut subir.

Le bloc optique selon l'invention peut comporter d'autres caractéristiques qui peuvent être prises séparément ou en combinaison, et notamment :
- chaque zone d'affaiblissement peut être une zone présentant une épaisseur de matière strictement inférieure à celle d'une zone voisine ;
   ➢ l'épaisseur de chaque zone d'affaiblissement peut être inférieure ou égale à 1,5 mm ;
- chaque zone d'affaiblissement peut s'étendre juste après le bord périphérique et peut présenter une forme générale similaire à celle d'une partie de la partie supérieure du bord périphérique. En variante, chaque zone d'affaiblissement peut débuter à une extrémité du bord périphérique et peut s'étendre vers une partie arrière de la paroi ;
- le bord périphérique du boîtier peut comprendre une gorge dans laquelle est collé un bord périphérique de la glace de protection.

L'invention propose également un véhicule terrestre, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un bloc optique selon l'invention,
- la figure 2 illustre schématiquement, dans une vue en perspective, le boîtier du bloc optique de la figure 1, et
- la figure 3 illustre schématiquement une petite partie de la partie supérieure de la paroi du boîtier de la figure 2, dans une vue en coupe selon l'axe III-III.

L'invention a notamment pour but de proposer un bloc optique BO destiné à équiper un véhicule terrestre et comprenant un boîtier BB comportant une paroi PB délimitant une cavité logeant des moyens définissant au moins une fonction photométrique (d'éclairage, de signalisation ou de décoration) et à laquelle est solidarisée une glace de protection GP.

Dans ce qui suit, on considère, à titre d'exemple non limitatif, que le bloc optique BO est destiné à équiper un véhicule terrestre de type automobile. Mais l'invention n'est pas limitée à ce type de véhicule terrestre. Elle concerne en effet tout type de véhicule terrestre comportant au moins un bloc optique.

Par ailleurs, on considère dans ce qui suit, à titre d'exemple non limitatif, que le bloc optique BO est un phare (ou projecteur avant).

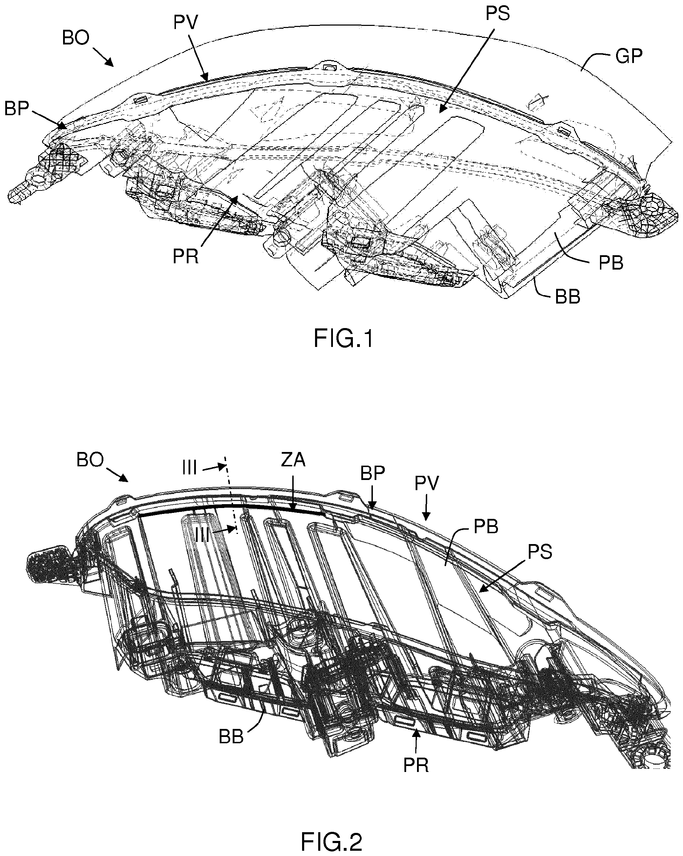

On a schématiquement illustré sur la figure 1 un exemple de bloc optique BO selon l'invention. Comme illustré, ce bloc optique BO comprend notamment un boîtier BB et une glace de protection GP.

La glace de protection GP est réalisée dans un matériau au moins partiellement transparent, comme par exemple du verre ou une matière plastique ou synthétique, et éventuellement teinté.

Le boîtier BB est réalisé dans un matériau rigide, comme par exemple une matière plastique ou synthétique. Dans ce cas, il peut être réalisé par moulage. Ce boîtier BB comporte une paroi PB qui délimite une cavité logeant des moyens définissant au moins une fonction photométrique d'éclairage, de signalisation ou de décoration.

A titre d'exemple non limitatif, une fonction photométrique d'éclairage peut être une fonction de feu de croisement (ou code), une fonction de feu antibrouillard, ou une fonction de feu de route. Egalement à titre d'exemple non limitatif, une fonction photométrique de signalisation peut être une fonction d'indicateur de changement de direction (ou clignotant), une fonction de feu de stop, une fonction de feu de position (ou veilleuse ou encore lanterne), une fonction de feu de jour (ou DRL (pour « Daytime running Light (or Lamp) » - signalisation lumineuse allumée automatiquement lorsque le véhicule est mis en fonctionnement pendant le jour)), ou une fonction d'accueil (ou de courtoisie).

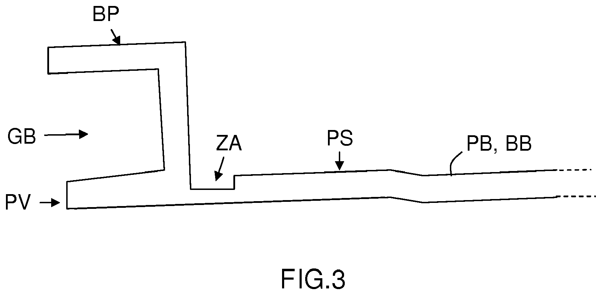

La paroi PB du boîtier BB comprend dans une partie avant PV un bord périphérique BP auquel est couplée la glace de protection GP. Par exemple, ce couplage peut se faire par collage. Dans ce cas, et comme illustré sur la figure 3, le bord périphérique BP comprend une gorge GB dans laquelle est collé un bord périphérique de la glace de protection GP.

Selon l'invention, la paroi PB comprend, au moins dans une partie supérieure PS, au moins une zone d'affaiblissement ZA définie au moins en partie au voisinage de son bord périphérique BP. Chaque zone d'affaiblissement ZA est propre, en cas de force exercée sur la glace de protection GP par l'impact d'une partie d'un corps, à permettre à la paroi PB de se casser et ainsi permettre un enfoncement de la partie du corps dans la cavité.

On comprendra en effet que le bris du boîtier BB dans sa partie avant PV évite qu'il interrompe brusquement en cas de choc l'enfoncement de la partie du corps. Il en résulte une augmentation significative des côtes d'enfoncement du corps, de nature à limiter les dommages qu'il peut subir.

On notera que, dans le cas d'un impact se faisant en premier sur la glace de protection GP ou sur une partie du boîtier BB qui avoisine la glace de protection GP, et donc dans une zone où la côte d'enfoncement des éléments voisins (recouvrants) est très faible, il est préférable que chaque zone d'affaiblissement ZA débute le plus près possible du bord périphérique BP. Ainsi, une très grande partie de l'énergie de l'impact sert à casser (ou briser) la paroi PB. Plus la distance séparant la glace de protection GP du début de la zone d'affaiblissement ZA est grande, plus la quantité d'énergie de l'impact disponible pour briser la paroi PB est petite (le moment de l'impact étant retardé par les éléments recouvrant le boîtier BB (capot ou pare-chocs), plus on va vers l'arrière du boîtier BB, plus la distance entre le boîtier BB et ces éléments augmente).

Dans l'exemple illustré non limitativement sur les figures 1 et 2, la paroi PB du boîtier BB ne comprend qu'une seule zone d'affaiblissement ZA. Mais elle pourrait en comporter plusieurs, par exemple deux ou trois, voire plus encore. Dans ce cas, elles peuvent être placées les unes à la suite des autres et/ou les unes à côté des autres.

De préférence, et comme illustré non limitativement sur la figure 3, chaque zone d'affaiblissement ZA est une zone qui présente une épaisseur de matière strictement inférieure à celle d'une zone voisine. On entend ici par « zone voisine » une zone qui est située juste à côté (ou dans le prolongement) d'une zone d'affaiblissement ZA. Cette différence d'épaisseur peut, par exemple, résulter du moule utilisé pour réaliser le boîtier BB.

Par exemple, et comme illustré non limitativement sur la figure 3, l'épaisseur de chaque zone d'affaiblissement ZA peut être inférieure ou égale à 1,5 mm.

On notera que dans une variante de réalisation chaque zone d'affaiblissement ZA pourrait résulter de la définition de trous traversants placés les uns à la suite des autres et/ou les uns à côté des autres. Mais dans ce cas ces trous traversants doivent être masqués de l'intérieur et/ou de l'extérieur par des moyens d'étanchéité de sorte que le bloc optique BB demeure étanche.

Dans l'exemple illustré non limitativement sur les figures 2 et 3, chaque zone d'affaiblissement ZA s'étend juste après le bord périphérique BP et présente une forme générale qui est similaire à celle d'une partie de la partie supérieure PS du bord périphérique BP. On entend ici par « similaire » le fait de suivre sensiblement ou au moins approximativement, localement, la forme de la partie supérieure PS du bord périphérique BP. Ce suivi n'empêche pas une éventuelle ondulation par rapport à la forme générale, par exemple de type sinusoïdale.

On notera que dans cet exemple illustré, la zone d'affaiblissement ZA s'étend juste après le bord périphérique BP sur une partie seulement de sa partie supérieure PS. Mais elle pourrait s'étendre sur toute la longueur de la partie supérieure PS.

Dans une variante de réalisation, chaque zone d'affaiblissement ZA pourrait débuter à une extrémité (libre) du bord périphérique BP et s'étendre vers la partie arrière PR de la paroi PB, qui est opposée à sa partie avant PV (située au voisinage de la glace de protection GP).

Cette extension peut, éventuellement, se faire suivant une direction privilégiée. Ainsi, elle peut, par exemple, se faire suivant la direction longitudinale du véhicule (laquelle est sensiblement parallèle aux portes latérales (ou portières)).

On notera que dans cette variante de réalisation la forme de chaque zone d'affaiblissement ZA peut être sensiblement rectiligne ou bien curviligne (avec éventuellement plusieurs courbures différentes).

On notera également que la forme de chaque zone d'affaiblissement ZA peut être notamment contrainte par une direction de démoulage du moule qui est utilisé pour réaliser le boîtier BB.

## Revendications

1. Bloc optique (BO) destiné à équiper un véhicule terrestre et comprenant un boîtier (BB) comportant une paroi (PB) délimitant une cavité, logeant des moyens définissant au moins une fonction photométrique, et comprenant un bord périphérique (BP) auquel est couplée une glace de protection (GP), ladite paroi (PB) comprenant, au moins dans une partie supérieure (PS), au moins une zone d'affaiblissement (ZA) définie au moins en partie au voisinage dudit bord périphérique (BP) et propre, en cas de force exercée sur ladite glace de protection (GP) par l'impact d'une partie d'un corps, à permettre à ladite paroi (PB) de se casser et ainsi permettre un enfoncement de ladite partie du corps dans ladite cavité, ledit bloc étant **caractérisé en ce que** chaque zone d'affaiblissement (ZA) s'étend juste après ledit bord périphérique (BP) et présente une forme générale similaire à celle d'une partie de la partie supérieure dudit bord périphérique (BP), et **en ce que** ledit bord périphérique (BP) comprend une gorge (GB) dans laquelle est collé un bord périphérique de ladite glace de protection (GP).

2. Bloc optique selon la revendication 1, **caractérisé en ce que** chaque zone d'affaiblissement (ZA) est une zone présentant une épaisseur de matière strictement inférieure à celle d'une zone voisine.

3. Bloc optique selon la revendication 2, **caractérisé en ce que** ladite épaisseur est inférieure ou égale à 1,5 mm.

4. Véhicule terrestre, **caractérisé en ce qu'**il comprend au moins un bloc optique (BO) selon l'une des revendications précédentes.

5. Véhicule selon la revendication 4, **caractérisé en ce qu'**il est de type automobile.
